# EUROPEAN PATENT APPLICATION

(11) **EP 1 533 672 A1**
(43) Date of publication of application: **25.05.2005**
(21) Application number: 03794063.2
(22) Date of filing: 16.07.2003
(51) Int. Cl.: G05B 19/418

(54) **BACK ORDER MANAGEMENT SYSTEM**

(30) Priority: 29.08.2002 JP 2002250656; 31.10.2002 JP 2002318254
(71) Applicant: Honda Giken Kogyo Kabushiki Kaisha, Minato-ku, Tokyo 107-8556 (JP)
(72) Inventor: YOKOYAMA, Hiroaki, c/o HONDA GIKEN KOGYO K.K., Minato-ku, Tokyo 107-8556 (JP); IWAMOTO, Hitoshi, c/o HONDA GIKEN KOGYO K.K., Minato-ku, Tokyo 107-8556 (JP); TODOROKI, Aki, c/o HONDA GIKEN KOGYO K.K., Minato-ku, Tokyo 107-8556 (JP)
(74) Representative: Cheyne, John Robert Alexander Mackenzie
(86) International application number: PCT/JP2003/009022
(87) International publication number: WO 2004/023229

(57) **Abstract**

The host computer of a product manufacturer (1) is provided with a back order database (12) containing order information and back order information, a procurement order database (13) containing procurement order information and a production control database (14) containing production schedule information and delivery date information to manage information integrally, and the host computer of the product manufacturer (1) and the terminals of part makers (3) are connected by leased communication lines for information exchange. The part makers (3) are able to retrieve directly information contained in those databases (12, 13, 14) through the leased communication lines, and are able to enter directly production schedule information and delivery date information into the production control database (14) by means of a received order managing means (15). Thus, the product manufacturer (1), the sales shops (2) and the part makers (3) share information about the progress of transactions relating to back orders, information is processed accurately and quickly, delivery date is decided quickly, notice about delivery date is given quickly, and time necessary for responding to inquiries about delivery date made by sales shops and customers is reduced significantly. Wasteful urging work of a procurement clerk can be eliminated, man-hour can be reduced and operations for dealing with part makers and customers can be quickly carried out by using a data slide response system that allots a part of a periodic order to a back order.

## Description

### TECHNICAL FIELD

The present invention relates to a back order management system for managing a back order placed for commodities with a product manufacturer, by a sales shop. When a sales shop places an irregular order for commodities with a product manufacturer, it sometimes occurs that the stock of the commodities in the product manufacturer is null or not sufficient and cannot fully cope with the irregular order. An irregular order in such a case is called a back order.

### BACKGROUND ART

In a conventional marketing system, when an order for parts is placed by a sales shop, a district sales center, an overseas subsidiary shop or an overseas distributor with a product manufacturer who manufacture products, the order is sent by facsimile transmission or the like to the product manufacturer, and the received-order management department of the product manufacturer receives the order. Then, the received-order management department compares the order with a stock of parts and, if the order is greater than the stock, the received-order management department determines an excess quantity of parts exceeding the stock, and the order-placing department of the product manufacturer places an order for the excess quantity of parts with a part maker.

In the meantime, pieces of information about orders received and those of information about orders placed are conveyed sequentially to the relevant departments of the product manufacturer.

The part maker receives the order by facsimile transmission or the like, plans a production schedule and determines the date of delivery of the parts ordered, taking into consideration its stock of the parts.

Then, the part maker sends information about the production schedule and the date of delivery to the product manufacturer by facsimile transmission or the like.

The communication department of the product manufacturer receives the information from the part maker, another department extracts necessary information including information about the date of delivery from the information provided by the part maker and stock information, and sends information about the date of delivery of the parts ordered to the sales shop.

Information needs to be conveyed smoothly and sequentially to the relevant departments of the sales shop, the product manufacturer and the part maker while information about transactions originated by the order placed by the sales shop is transmitted from sales shop to the product manufacturer, from the product manufacturer to the part maker and in the reverse order to the sales shop.

Since the related departments, the sales shop and the part maker carry out management individually and are unable to share common information about the transactions, redundant, useless operations are performed, and it takes for the sales shop to receive information about the date of delivery of parts at least six days after the placement of a back order for the parts.

Therefore, it takes six or more days for the sales shop to inform the user of the date of delivery after the user placed an order for the parts with the sales shop.

Since the management of information about back orders is not integrated, mistakes often occur in managing the information.

There are only a few superior part makers who use a delivery date reply system effectively and deliver parts ordered on set delivery date. Therefore, a part procurement department needs to teach part makers how to operate the delivery date reply system effectively.

Some enterprise is associated with more than 500 part makers and deals more than 500,000 parts. Such an enterprise intends to carry out delivery management, using data including data on delivery for managing and instructing part makers.

However, conventional managing techniques have the following problems.

The same reminding operations as those for reminding part makers who delays delivering parts behind an appointed delivery date (hereinafter referred to as "delivery delaying part makers") of responding to an inquiry about delivery date are performed for superior part makers who do not delay the delivery of parts, but delay responding to the inquiry behind actual delivery date.

Much time and work are necessary for analyzing data on parts delivered and part makers who delivered parts, and the completion of back orders is delayed.

### DISCLOSURE OF THE INVENTION

The present invention has been made in view of such problems and it is therefore an object of the present invention to provide a back order management system capable of accurately and quickly achieving information processing by integrally managing information about back orders and enabling related parties to share information about the progress of transactions, and of quickly responding to inquiries about delivery date.

Another object of the present invention is to provide a back order management system capable of simplifying and quickly achieving ordering work by allotting unfulfilled periodic orders placed with superior part makers on the basis of part makers' records to urgent orders, and of responding to inquiries made by users in early stages.

According to a first aspect of the present invention, a back order management system comprises: a host computer of a product manufacturer; and terminals of a plurality of part makers and connected to the host computer by leased communication lines for information exchange; wherein the host computer is provided with a stock database containing stock information about product manufacturer's stock of parts, a back order database containing order information and back order information provided by the sales shops and such, a procurement order database containing procurement order information about procurement orders placed with the part makers, a production control database containing production schedule information and delivery date information determined by the part makers, a procurement managing means for entering procurement order information about procurement orders placed with the part makers on the basis of the order information about orders placed by the sales shops and such and the stock information contained in the stock database into the procurement order database, and a back order managing means for entering back order information into the back order database on the basis of stock information contained in the stock database, and production schedule information and delivery date information contained in the production control database into the back order database, and each of the terminals of the plurality of part makers is provided with a received order managing means for entering the production schedule information and delivery date information created on the basis of the procurement orders placed by the product manufacturer into the production control database through the leased communication lines.

The host computer of the product manufacturer is provided with the back order database containing order information and back order information, the procurement order database containing procurement order information and the production control database containing production schedule information and delivery date information to manage the information integrally, and the host computer of the product manufacturer and the terminals of the part makers are connected by the leased communication lines for information exchange. Thus, the part makers are able to retrieve directly information contained in those databases through the leased communication lines, and are able to enter directly production schedule information and delivery date information into the production control database by means of the received order managing means.

Thus, the product manufacturer, the sales shops and such and the part makers share information about the progress of transactions relating to back orders, information is processed accurately and quickly, delivery date is decided quickly, notice about delivery date is given quickly, and time necessary for responding to inquiries about delivery date made by sales shops and customers is reduced significantly.

The host computer of the product manufacturer is connected to the terminals of the plurality of part makers and terminals of the sales shops and such by Web lines for exchanging e-mail messages, the procurement managing means enters the procurement order information into the procurement order database and sends e-mail messages describing the procurement order information to the part makers through the Web lines, the received order managing means enters the production schedule information and delivery date information into the production control database and sends e-mail messages describing the production schedule information and the delivery date information to the product manufacturer through the Web lines, the back order managing means enters the back order information into the back order database and sends e-mail messages describing the back order information to the shops and such through the Web lines. Since the procurement managing means enters the procurement order information about procurement orders into the procurement order database and places procurement orders by sending e-mail messages describing the procurement order information to the part makers, the part makers are able to know the procurement orders quickly and is able to confirm the details of the procurement orders by accessing the procurement order database.

Since the received order managing means enters the production schedule information and delivery date information into the back order database and sends e-mail messages describing the back order information to the sales shops and such, the product manufacturer is able to know the production schedule information and the delivery date information quickly and to confirm the same easily from the production control database.

Since the back order managing means enters the back order information into the back order database and sends e-mail messages describing the back order information to the sales shops and such, the sales shops and such are able to know the delivery date information included in the back order information quickly and to respond to inquiries made by users in early stages.

According to a second aspect of the present invention, a back order management system comprises: a host computer of a product manufacturer; terminals of a plurality of sales shops connected to the host computer by leased communication lines for information exchange; and terminals of a plurality of part makers connected to the host computer by leased communication lines for information exchange; wherein the host computer is provided with a stock database containing stock information about product manufacturer's stock, a back order database containing order information and back order information provided by the sales shops, a procurement order database containing procurement order information about procurement orders placed with the part makers, a production control database containing production schedule information and delivery date information determined by the part makers, a procurement managing means for entering the procurement order information about procurement orders placed with the part makers on the basis of the order information about orders placed by the sales shops and the stock information contained in the stock database into the procurement order database, and a back order managing means for entering back order information into the back order database on the basis of stock information contained in the stock database, and production schedule information and delivery date information contained in the production control database into the back order database, each of the terminals of the plurality of sales shops is provided with an order managing means for entering order information through the leased communication line into the back order database, and each of the terminals of the plurality of part makers is provided with a received order managing means for entering the production schedule information and delivery date information created on the basis of the procurement orders placed by the product manufacturer into the production control database through the leased communication lines.

The host computer of the product manufacturer is provided with the back order database containing order information and back order information, the procurement order database containing procurement order information and the production control database containing production schedule information and delivery date information to manage the information integrally, and the host computer of the product manufacturer, the terminals of the plurality of sales shops, and the terminals of the part makers are connected by the leased communication lines for information exchange. Thus, the sales shops and the part makers are able to retrieve directly information contained in those databases through the leased communication lines, the sales shops are able to enter directly order information into the back order database by means of the order managing means, and the part makers are able to enter directly production schedule information and delivery date information into the production control database by means of the received order managing means.

Thus, the product manufacturer, the sales shops and the part makers share information about the progress of transactions relating to back orders, information is processed accurately and quickly, delivery date is decided quickly, notice about delivery date is given quickly, and time necessary for responding to inquiries about delivery date made by sales shops and customers is reduced significantly.

The host computer of the product manufacturer is connected to the terminals of the plurality of part makers and terminals of the sales shops by Web lines for exchanging e-mail messages, the order managing means enters the order information into the back order database and sends e-mail messages describing the order information through the Web line to the product manufacturer, the procurement managing means enters the procurement order information into the procurement order database and sends e-mail messages describing the procurement order information to the part makers through the Web lines, the received order managing means enters the production schedule information and the delivery date information into the production control database and sends e-mail messages describing the production schedule information and the delivery date information to the product manufacturer through the Web lines, the back order managing means enters the back order information into the back order database and sends e-mail messages describing the back order information to the shops and such through the Web lines, and the order managing means enters the order information into the back order database and sends e-mail messages describing the order information to the product manufacturer to place orders with the product manufacturer. Thus, product manufacturer is able to know the orders quickly and is able to confirm the details of the orders by accessing the back order database.

Since the procurement managing mean enters the procurement information into the procurement order database and sends e-mail messages describing the procurement order information to the part makers to place orders, the part makers are able to obtain orders quickly and to know the details of the procurement orders by accessing the procurement order database.

Since the received order managing means enters the production schedule information and the delivery date information into the back order database and sends e-mail messages describing the production schedule information and the delivery date information to the product manufacturer, the product manufacturer is able to know the production schedule information and the delivery date information quickly and to confirm the same from the production control database.

According to a third aspect of the present invention, a back order management system for evaluating and managing delivery date comprises: a host computer of a product manufacturer connected to a network; a storage means connected to the host computer; and a terminal of the product manufacturer connected to the host computer; wherein the storage means is provided with a part maker database containing data on part makers, and an undelayed delivery ratio database containing undelayed delivery ratios calculated on the basis of delivery date data and a delivery record from a part maker to the product manufacturer, the host computer makes a superior part maker database containing data on superior part makers on the basis of the part maker database and the undelayed delivery ratio database, determines superior part makers on the basis of the superior part maker database, compares the delivery date and quantity of parts delivered contained in a part procurement database relating to periodic procurement with the delivery date and quantity of parts ordered in urgent back orders, makes a back order delivery date response database containing a delivery date response to be given to a customer by allotting the procurement data contained in the procurement database to the back order when the result of comparison meets a predetermined condition, allots the procurement data contained in the procurement database to the back order when the delivery date of the parts contained in the procurement database is earlier than an appointed delivery date and the quantity of the parts delivered contained in the database is greater than the quantity of parts ordered by the back order, sends the allotted procurement data as data for a response concerning delivery to the terminal and makes the terminal display the procurement data on a screen, sends the delivery date response through the network by a responding means, such as e-mail, to the terminal of a customer, and the host computer selects part makers meeting predetermined selecting conditions including an undelayed delivery ratio exceeding a predetermined threshold in a predetermined period, as superior part makers.

The same reminding operations as those for reminding general part makers who deliver pats at a low undelayed delivery have been performed to remind superior part makers of responding to an inquiry about a delivery date for parts ordered. Therefore, much time is necessary for analyzing data, and operations to cope with a back order (urgent order), such as notifying a customer of a delivery date in response to an inquiry made by the customer and urging a part maker to deliver parts ordered, is delayed. Wasteful urging work of a procurement clerk can be eliminated, man-hour can be reduced and operations for dealing with part makers and customers can be quickly carried out by using a "data slide" response system that allots a part of a periodic order to a back order.

In the back order management system according to the present invention, the storage means is provided with a part procurement database containing part procurement date on parts procured from all part makers, the host computer makes an undelayed delivery ratio database by calculating a delivery ratio, i.e., the ratio of the quantity of parts delivered to the quantity of parts ordered, on the basis of the part procurement date contained in the part procurement database, makes an abnormal delivery ratio database containing abnormal delivery ratios each calculated by dividing the difference between the quantity of parts ordered and that of parts delivered by the quantity of parts ordered for each part maker, sends the details of an appointed delivery date appointed for each order number of an order placed with each part maker, and an actual delivery date, and the abnormal delivery ratio with each part maker to the terminal, and makes the terminal display the details on a screen.

In the back order management system according to the present invention, the storage means is provided with a part procurement database containing data on parts procured from all part makers, and the host computer extracts the number of types of parts ordered by urgent back orders from the part procurement database, extracts the number of parts ordered in the response concerning delivery, alloted to back orders, makes a back order hit ratio database containing back order hit ratios each corresponding to the ratio of the number of data in the response concernig delivery to the number of order data in the part maker, sends the back order hit ratios to the terminal, and makes the terminal display the back order hit ratios on a screen.

In the back order management system according to the present invention, the storage means is provided with a part procurement database containing data on parts procured from all part makers, and the host computer extracts the number of types of parts delivered on appointed delivery dates and the number of types of parts represented by procurement data from the part procurement database, makes a back order delivery ratio database containing back order delivery ratios each representing the ratio of the number of types of parts delivered on an appointed delivery date to the number of parts ordered by a back order, sends the back order delivery ratios to the terminal, and makes the terminal to display the back order delivery ratios on a screen.

In the back order management system according to the present invention, the storage means is provided with a part procurement database containing part procurement records relating to all part makers, and the host computer extracts the number of types of parts delivered within a set number of days counted from the date of order to a part maker to the date of delivery, and the number of back-ordered types of parts from the part procurement database, calculates back order delivery speeds each corresponding to the ratio of the number of types of parts delivered within a set number of days to the number of back-ordered types of parts in the part maker, makes a back order delivery speed database containing the back order delivery speeds, sends the back order delivery speeds to the terminal, and makes the terminal display the back order delivery speeds on a screen.

In the back order management system according to the present invention, the host computer sends the contents of data on delivered parts and abnormal delivery ratios not smaller than or exceeding a predetermined set value to the terminals of the relevant part makers, and makes the terminals of the relevant part makers display the contents of data on a screen.

In carrying out the data slide response system, superior part makers superior in keeping delivery date is extracted by using the undelayed delivery ratio. Meticulous management of part makers including the confirmation of delivery date and urging part makers to deliver ordered parts can be achieved to make part makers make catch-up efforts by analyzing summary data, such as the undelayed delivery ratio.

Accurate response about delivery date can be quickly given to customers on the basis of the delivery date record of superior part makers by providing the summary of planned procurement and achieved procurement allotted to the response slide system in superior part makers. The collection and preparation of data on achievements, such as the summary, can be automatically carried out.

### BRIEF DESCRIPTION OF THE DRAWINGS

Fig. 1 is a block diagram of a back order management system in a first embodiment of the present invention;
Fig. 2 is a flow chart of a back order managing procedure to be carried out by the back order management system;
Fig. 3 is a block diagram of a back order management system in a second embodiment of the present invention, the back order management system being a system for estimating delivery of parts back-ordered by a part maker;
Fig. 4 is a picture displayed in selecting a part maker with which a procurement order is to be placed in step S22 by the back order management system shown in Fig. 3;
Fig. 5 is a flow chart of a superior part maker database making procedure;
Fig. 6 is a picture of a delivery progress record used in step S32 of the superior part maker database making procedure shown in Fig. 5;
Fig. 7 is a picture of an abnormal delivery ratio record used in step S33 of the superior part maker database making procedure shown in Fig. 5;
Fig. 8 is a picture of a back order hit ratio record used for back order management by a system for estimating delivery of parts back-ordered by a part maker, according to the present invention, which is the back order management system;
Fig. 9 is a picture of a back order hit ratio record used for back order management by the system for estimating delivery of parts back-ordered by a part maker, according to the invention, which is the back order management system; and
Fig. 10 is a picture of the back order hit ratio record used for back order management by the system for estimating delivery of parts back-ordered by a part maker, according to the invention, which is the back order management system.

### BEST MODE FOR CARRYING OUT THE INVENTION

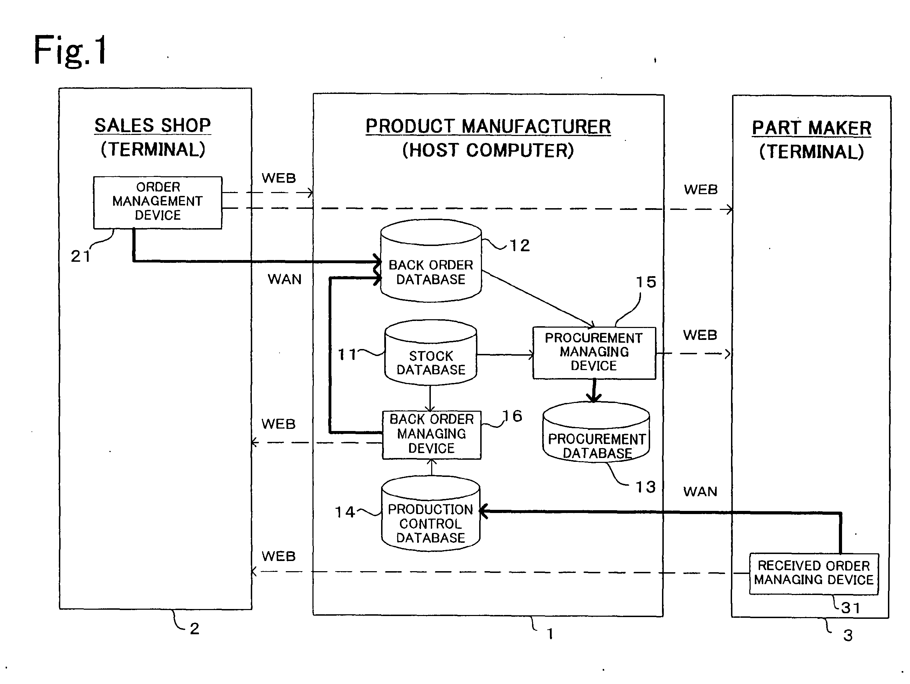

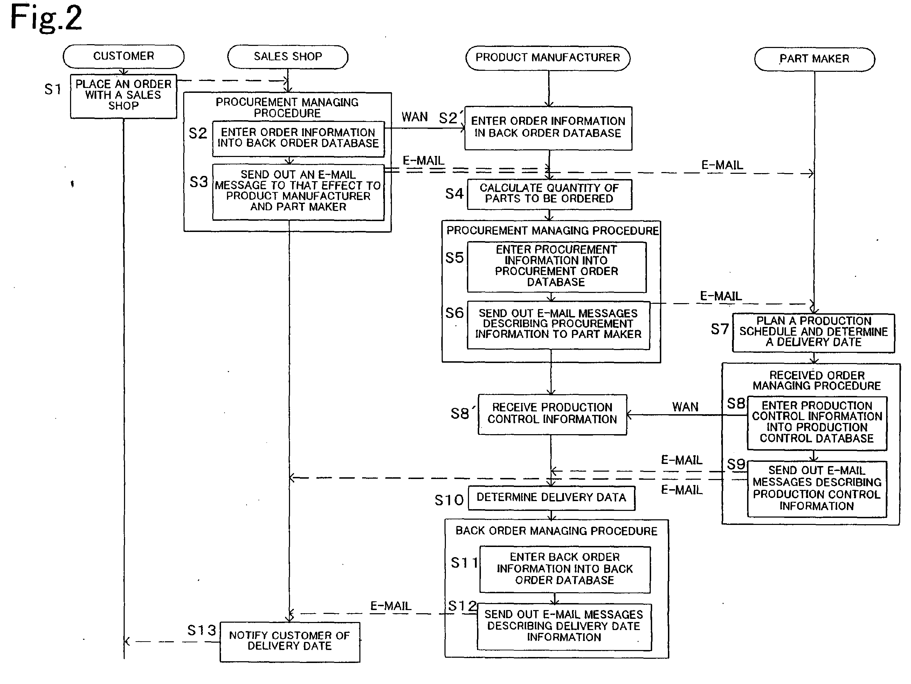

A back order management system in a first embodiment of the present invention will be described with reference to Figs. 1 and 2. In the drawings, the same components are denoted by the same reference characters.

Referring to Fig. 1, terminals 2 of sales shops, district selling agents, dealers and such (which will be referred to inclusively as "sales shops"), and terminals 3 of part makers are connected to a host computer of a product manufacturer 1 by a leased WAN (wide area network) for communication.

The terminals 2 of the sales shops, district selling agents and such and the terminals 3 of the part makers are connected to the host computer of the product manufacturer 1 by Web lines for communication.

The host computer of the product manufacturer is provided with a stock database 11 containing stock information about the stock of the product manufacturer 1, a back order database 12 containing order information about orders placed by the sales shops 2 and back order information, a procurement order database 13 containing procurement order information about procurement orders placed with the part makers 3, a production control database 14 containing production schedule information and delivery date information on the side of the part maker 3.

Each sales shop 2 is able to enter order information directly into the back order database 12 of the host computer by means of an order management device 21 of the terminal by the WAN.

Upon the reception of an order, the product manufacturer 1 compares the quantity of the ordered parts inputted to the back order database 12 with the quantity of the stock of the parts stored in the stock database 11, and a procurement managing device 15 enters an excess quantity of parts that cannot be fulfilled by the stock into the procurement order database 13.

Upon the reception of a procurement order, the part maker 3 plans a production schedule and determines the date of delivery of the parts ordered, taking into consideration its stock of parts and related conditions. A received order managing device 31 of the terminal of the part maker 3 is able to enter directly production schedule information about the production schedule and delivery date information about the delivery date into the production control database 14 of the host computer of the product manufacturer 1.

A back order managing device 16 of the product manufacturer 1 enters into the back order database 12 back order information which includes a delivery date for the ordered parts to be given to the sales shop 2 and which is determined on the basis of the production plan information and the delivery date information entered into the production control database 14 and stock information contained in the stock database 11.

A back order managing procedure to be carried out by the back order managing system in the first embodiment will be described with reference to a flow chart shown in Fig. 2.

A customer wants to buy parts from the sales shop 2, the sales shop 2 refers to the stock. The sales shop 2 sells the parts immediately to the customer if a desired quantity of parts is in stock. If the parts are not in stock, the customer places an order for the parts with the sales shop 2 (step S1).

The sales shop 2 places orders with the product manufacturer 1 to obtain the parts ordered by the customer and to replenish its stock with parts.

The sales shop 2 carries out an order-placing procedure to place an order with the product manufacturer 1. The order-placing procedure includes entering order information including the description of the parts to be ordered, the number of the parts, the level of urgency and such into the back order database 12 of the product manufacturer 1 (step S2), and automatically sending an e-mail message to that effect through Web lines to the product manufacturer 1 and the part maker 3 (step S3).

The terminal of the sales shop 2 is operated to enter the order information through the WAN into the back order database 12 of the product manufacturer 1 (step S2').

An address for the order information in the back order database 12 is specified according to the URL in an e-mail message for the order. Therefore, the part maker 3 who receives the order is able to know the details of the order easily by accessing the address in the back order database 12.

The product manufacturer 1 is notified of the reception of the order by e-mail and is able to confirm the details of the order by opening the back order database 12.

The product manufacturer 1 refers to the stock database 11 to confirm the condition of the stock of the parts, compares the quantity of the stock with the quantity of the parts ordered, and calculates the quantity of parts to be ordered with the part maker 3 if the quantity of the parts ordered exceeds the quantity of the stock (step S4).

The product manufacturer 1 carries out a procurement managing procedure. The procurement managing procedure enters procurement information to be given to the part maker 3 into the procurement order database 13 (step S5), and sends e-mail messages describing the procurement information automatically to the part maker 3 through the Web line (step S6).

An address for the procurement information in the procurement order database 13 is specified according to the URL in an e-mail message for the procurement order. Therefore, the part maker 3 received the procurement order is able to know the details of the procurement order easily by accessing the address in the procurement order database 13.

Upon the reception of the procurement order, the part maker 3 plans a production schedule and determines the date of delivery of the parts ordered to the product manufacturer 1 taking into consideration its stock of parts and related conditions (step S7).

The part maker 3 carries out a received order managing procedure. The received order managing procedure enters production control information including production schedule information and delivery date information into the production control database 14 by the terminal (step S8), and sends e-mail messages describing the production control information automatically to the product manufacturer 1 and the sales shop 2 through the Web line (step S9).

The terminal of the part maker 3 enters the production control information directly into the production control database 14 of the product manufacturer 1 through the WAN (step S8').

A received order managing device 31 of the terminal of the part maker 3 is able to enter directly production control information about the production schedule and delivery date information about the delivery date into the production control database 14 of the host computer of the product manufacturer 1.

An address for the production control information in the production control database 14 is specified according to the URL by an e-mail message describing the production control information. Therefore, the sales shop 2 received the e-mail message is able to know the details of the production control information easily by accessing the address in the production control database 14.

Thus, the sales shop 2 can know the data of delivery of the parts from the part maker 3 to the product manufacturer 1 in early stages from the production control information.

The product manufacturer 1 determines the data of delivery of the parts to the sales shop 2 on the basis of the production control information entered into the production control database 14 and the condition of the stock contained in the stock database 11 (step S10).

The product manufacturer 1 carries out a back order managing procedure. The back order managing procedure enters back order information including the date of delivery to the sales shop 2 of the parts ordered into the back order database 12 (step S11) and sends e-mail messages describing delivery date information automatically to the sales shop 2 through the Web line (step S12).

Thus, the sales shop 2 can know the delivery date of the parts ordered from the e-mail messages describing the delivery date information and to tell the delivery date of the parts ordered to the customer (step S13).

The host computer of the product manufacturer 1 is provided with the back order database 12 containing order information and back order information, the procurement order database 13 containing procurement order information and the production control database 14 containing production schedule information and delivery date information provided by the part maker to manage the information about the back order integrally by the product manufacturer 1.

Since the terminals of the plurality of sales shops 2 and the terminals of the plurality of part makers 3 are connected to the host computer of the product manufacturer 1 by the WAN for information exchange, the sales shops 2 and the part makers 3 are able to retrieve the information contained in those databases directly, the sales shops 2 are able to enter order information directly into the back order database 12, and the part makers 3 are able to enter the production schedule information and the delivery date information directly into the production control database 14.

Thus, the product manufacturer 1, the sales shops 2 and the part makers 3 share information about the progress of transactions relating to back orders, information is processed accurately and quickly, delivery date is decided quickly, notice about delivery date is given quickly, and time necessary for responding to inquiries about delivery date made by sales shops and customers is reduced significantly.

Whereas the conventional back order managing system needs six days to give the information about the delivery date to the customer, the back order management system in the first embodiment of the present invention needs only three days, which is about half the time needed by the conventional back order managing system.

Since the product manufacturer 1 manages all information relating to the back order integrally, and the product manufacturer 1, the shops 2 and the part makers 3 are able to confirm easily the details of orders, procurement orders and received orders, there is no possibility of mistakes being made.

Since the product manufacturer 1, the sales shops 2 and the part makers 3 share the record of progress and results of operations for providing the delivery date and are able to look up the record, the duplication of operations can be avoided, and the product manufacturer 1, the sales shops 2 and the part makers 3 are able to deal properly and instantly with the cancellation of orders made by customers.

In the back order management system in the first embodiment, it is assumed that the sales shops 2 are in the country and the terminals of the sales shops 2 and the host computer of the product manufacturer 1 are included in the WAN. When the sales shops 2 are overseas sales shops and a WAN cannot be formed, orders placed by the sales shops 2 are sent to the product manufacturer 1 by facsimile or e-mail, and the product manufacturer 1 enters the order information into the back order database 12.

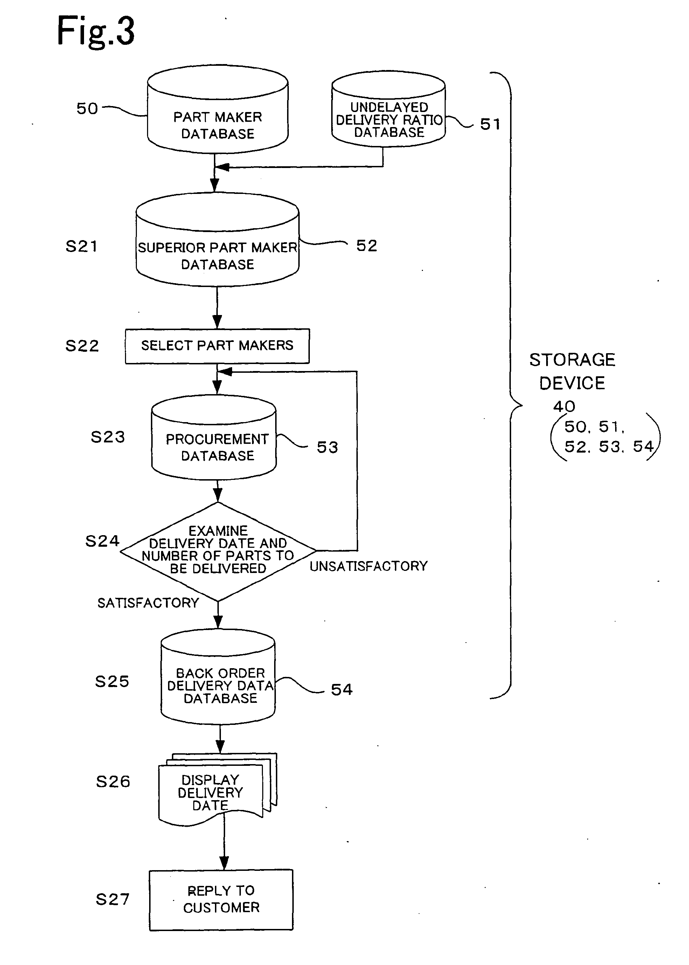

A back order managing system in a second embodiment of the present invention will be described with reference to Figs. 3 to 10. This back order managing system is a system for estimating delivery of parts back-ordered by a part maker. Parts are usually ordered by the product manufacturer with the part maker on the basis of an anticipated demand for parts, which includes parts included in a priodic order. The system for estimating delivery of back-ordered parts, that is, the back order management system, makes a delivery report including delivery date and quantity of delivered parts in reply to a back order, on the basis of information included in a response already obtained from the part maker, about the quantity of the parts and the delivery date thereof. However, some part makers are not good in accuracy of the delivery report. Therefore, only delivery reports from those part makers which have been good in the accuracy of their delivery reports and which have been deemed good or superior part makers, are used for estimating delivery of back-ordered parts.

The system for estimating delivery of ordered parts as a back order managing system in the second embodiment comprises a storage device (storage means) 40, shown in Fig. 3, and a host computer, not shown, that operates for calculation and decision making on the basis of information stored in the storage device 40. The storage device 40 is provided with a part maker database 50 containing information about parts to be procured, an undelayed delivery ratio database 51, a superior part maker database 52 containing information about part makers who keep delivery date, a procurement database 53 containing information about procurement orders placed with superior part makers, and a back order delivery date database 54 containing information about back orders.

The host computer is connected to the terminal, not shown, of a product manufacturer (part procurement enterprise), terminals, not shown, of part makers, and terminals, not shown, of sales shops including part dealers.

The part maker database 50 contains information about the part makers from which parts are procured.

The undelayed delivery ratio database 51 contains delivery records indicating whether or not parts ordered are delivered without delay, and undelayed delivery ratios calculated on the basis of the delivery records.

The superior part maker database 52 contains data on superior part makers meeting qualification conditions including fidelity in keeping delivery date and such.

The host computer selects superior part makers on the basis of the information contained in the part maker database 50 and the undelayed delivery ratio database 51 and makes the superior part maker database 52. The host computer selects part makers with whom the product manufacturer intends to have dealings. The host computer compares the information of an appointed delivery date of ordered parts and the number of parts delivered, contained in the procurement database 53, with an appointed delivery date for a back order and the number of parts in back order ( the delivery date and the number of parts delivered are referred to in Fig. 3), and makes the back order delivery date database 54. More specifically, the back order delivery date database 54 is made by collecting data about whether or not the number of parts already ordered with the part maker concides with the number of parts in the back order, and /or data about the number of parts that can be alloted to the back order, among the number of parts already ordered, excluding the number of parts that have already been alloted to another back order. Delivery date and number contained in the back order delivery date database 54 are displayed on the screen of the terminal for the customer. This response may be automatically sent through the network to the terminal of the sales shop or dealer.

As described in the foregoing, the back order delivery date database 54 is made by comparing the back order with the procurement database 53 and a response to inquiries made by the sales shop or dealer is made on the basis of the back order delivery date database 54. This response system is called a "data slide" response system for superior part makers.

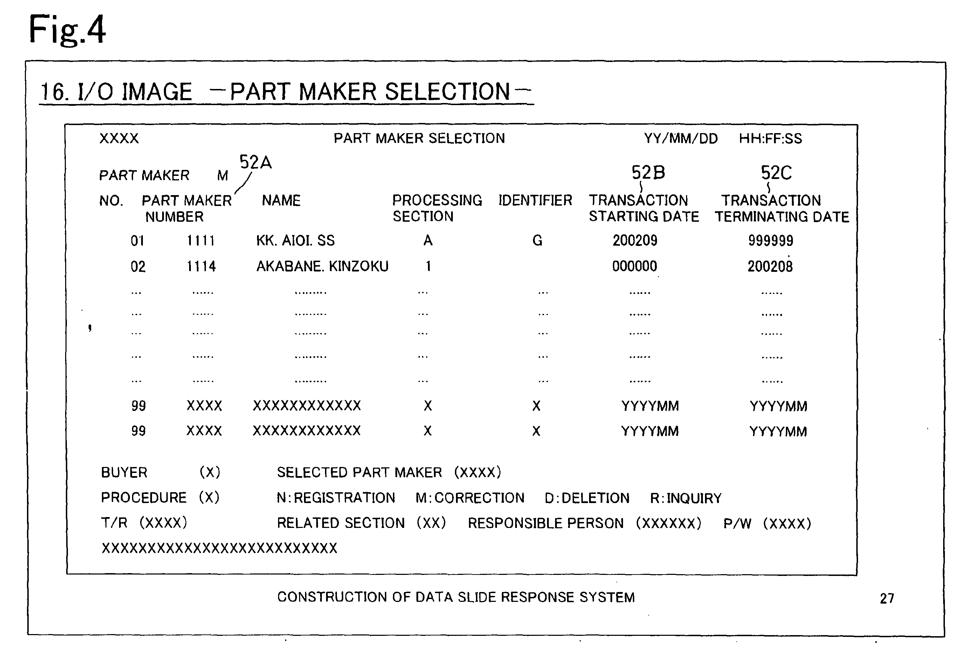

Fig. 4 shows a picture displayed in selecting a part maker with whom the product manufacturer intends to have dealings, as shown in Fig. 3.

Superior part makers to which the "data slide" response system is to be applied are displayed on the basis of the superior part maker database 52 by the terminal. An operator operates the terminal for checking.

As shown in Fig. 4, a transaction starting date 52B and a transaction terminating date 52C are displayed for each part maker 52A. When any period is not specified for the part maker 52A, the transaction starting date 52B and the transaction terminating date 52C are indicated, for example, by "000000" and "999999", respectively.

Referring back to Fig. 3, a back order managing procedure to be carried out by the back order management system (system for estimating delivery of parts back-ordered by a part maker) in the second embodiment will be described.

The host computer examines the variable records of delivery date at a predetermined period, such as a month, selects superior part makers meeting predetermined qualification conditions including fidelity in keeping delivery date, and makes the superior part maker database 52 (step S21). For example, part makers who delivered parts ordered in the past three months at undelayed delivery ratios exceeding a reference undelayed delivery ratio of 95% are selected as superior part makers.

A superior part maker with which a procurement order is to be placed is selected on the basis of the superior part maker database 52 in step S22.

In step S23 , the procurement database 53 containing parts ordered by previous periodic orders placed with the selected superior part makers, is compared with the delivery dates and the numbers of parts ordered by back orders, and selection is made of data on satisfactory cases in which the delivery dates of parts ordered by the previous periodic orders are earlier than the delivery dates of the parts ordered by back orders and the numbers of parts ordered by the previous periodic orders are larger (corresponding to "satisfactory" in the figure) than those of parts ordered by back orders (step S24).

The back order delivery date database 54 is made on the basis of the number of parts ordered by the back order and the delivery date, provided by the superior part makers, of the parts ordered by previous periodic orders, derived in step S24 , and the delivery date of the parts ordered by the back order is displayed on a screen (step S26) and are sent to the terminals of the customers (step S27). Means for sending responses to inquiries about delivery date to the terminals of customers (sales shops and dealers) include sending responses through a network by using any one of currently available communication means, such as telephone, facsimile, e-mail and Web pages.

Description will be made of a method of finding abnormal delivery relating to all the part makers including superior part makers in early stages and analyzing the causes of abnormal delivery for making the superior part maker database 52.

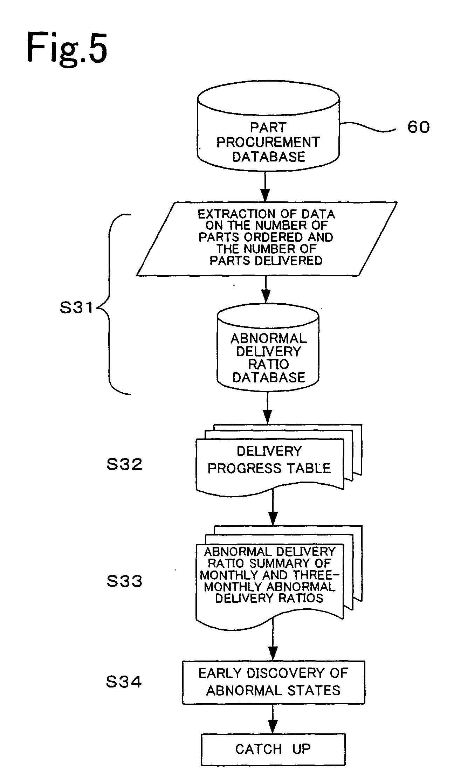

Fig. 5 is a flow chart of a superior part maker database making procedure.

The host computer extracts data on the number of parts ordered and the number of parts delivered for each type of parts from a part procurement database 60 being used for daily part procurement work (step S31). An abnormal delivery ratio database 61 is made from the data on the number of parts ordered and the number of parts delivered.

The data on the number of parts ordered and the number of parts delivered are sorted automatically according to part makers.

The extracted data on the number of parts ordered and that of parts delivered is itemized in a delivery progress table and the delivery progress table is displayed (step S32).

An abnormal delivery ratio summary of monthly abnormal delivery ratios and three-monthly abnormal delivery ratios in the past three months are displayed on a screen on the basis of abnormal delivery ratios (%), i.e., the ratios each of the difference between the number of parts ordered and the number of parts delivered to the number of parts ordered (step S33).

The display of the data in steps S32 and S33 on the terminal enables the operator to discover part makers having high abnormal delivery ratios in early stages and prompts the operator to take measures for reducing cases of abnormal delivery, enabling early detection of abnormal state (step S34).

Simultaneously with the early detection of abnormal state, the superior part maker database 52 is updated at a predetermined period, such as every three months, on the basis of the monthly abnormal delivery ratios and the abnormal delivery ratio summary of abnormal delivery ratios in the past three months.

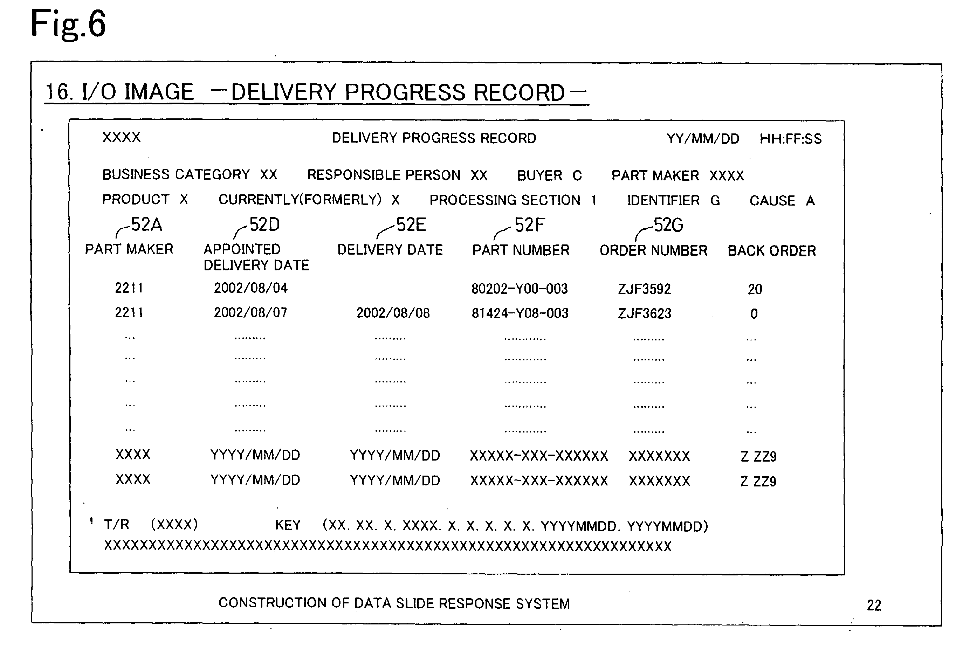

Fig. 6 shows, by way of example, a picture of a delivery progress record used in step S32 of the superior part maker database making procedure shown in Fig. 5.

As shown in Fig. 6, appointed delivery dates 52D and actual delivery dates 52E are shown for part makers 52A, order numbers 52G and part numbers 52F.

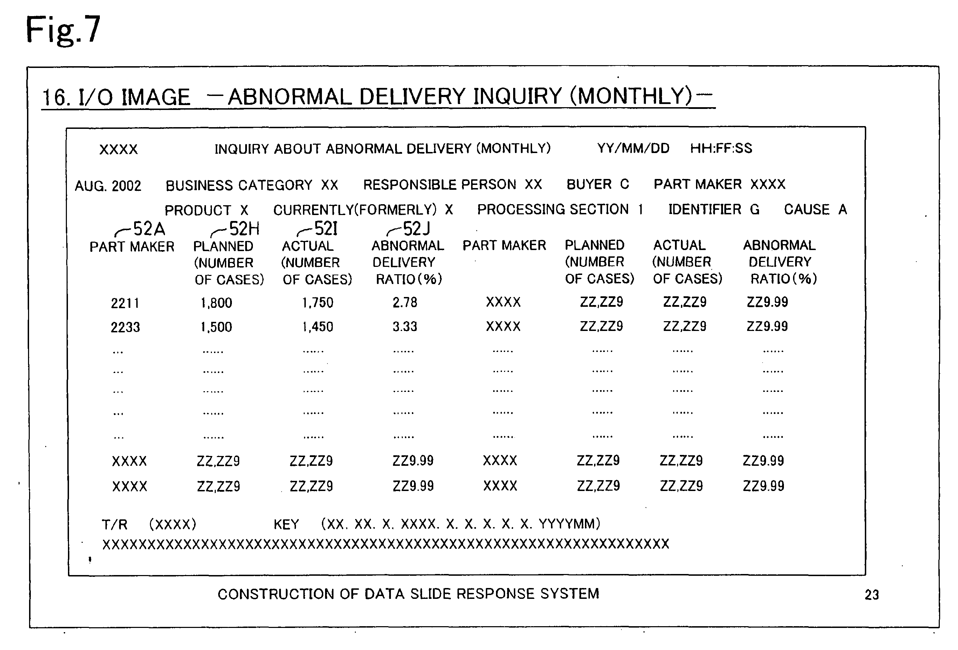

Fig. 7 shows, by way of example, a picture of an abnormal delivery ratio record used in step S33 of the superior part maker database making procedure shown in Fig. 5.

As shown in Fig. 7, expected numbers 52H, i.e., the numbers of parts ordered, actual numbers 52I, i.e. , the numbers of parts delivered, and abnormal delivery ratios 52J are shown for part makers 52A. Data shown in Fig. 7 is monthly data.

The delivery records of part makers are managed and part makers having the abnormal delivery ratios 52J are displayed with reference to the abnormal delivery ratio summary data in a predetermined period, such as the last month or the past three month including the last month.

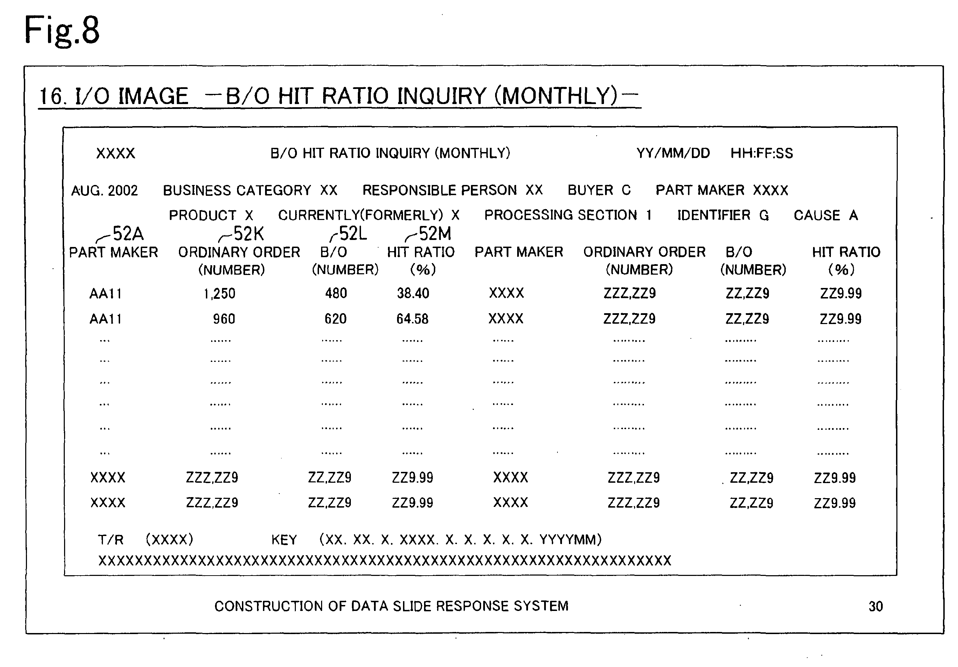

A method of making a record managing tool for managing back orders will be described. Fig. 8 is a picture illustrating record management by the back order management system (system for estimating delivery of parts back-ordered by a part maker) by way of example.

A procedure for determining a back order hit ratio in the "data slide" response system for a superior part maker is shown. The back order hit ratio is a value obtained by dividing the number of back-ordered parts by the number of parts included in the "data slide" response.
(a) Numbers of parts of part numbers allotted to urgent orders (back orders) are extracted from ordinary orders (periodic orders) contained in the part procurement database 60. The extracted data is recorded in the "data slide" response database, not shown, for the "data slide" response system for superior part makers.
(b) The number of parts included in the "data slide" responses to sales shops or dealers is extracted from the "data slide" response database for each item of the subjects (persons in charge of procurement, part makers, etc.) and the range of subjects (weekly, monthly, three-monthly, etc.).
(c) Back order hit ratios (%) each of the ratio of the number of parts ordered by a back order to the number of parts included in the "data slide" response is calculated in a record management database, not shown.
   As shown in Fig. 8, ordinary orders (periodic orders) 52K, back orders 52L corresponding to orders included in the "data slide" response, and hit ratios (back order hit ratios) 52M are displayed for each part maker 52A.

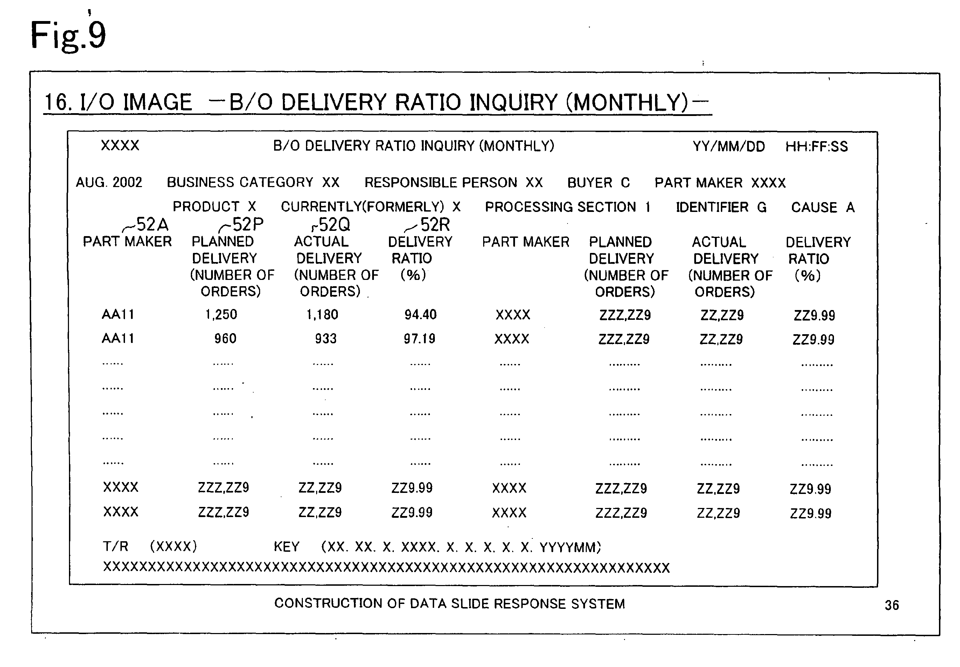

   Fig. 9 is another example of picture of assistance in explaining record management by the back order management system (system for estimating delivery of parts back-ordered by a part maker) in the second embodiment.
   The procedure for a back order delivery ratio in the "data slide" response system for superior part makers will be explained. The back order delivery ratio is a value obtained by dividing the number of parts delivered on an appointed delivery date among the parts ordered in anticipation of the demand, by the number of parts allotted to a back order.
(d) The numbers of parts delivered on appointed delivery dates, and the number of parts allotted to urgent orders (back orders) are extracted from the part procurement database 60.
(e) Delivery ratios (%) for the "data slide" response are calculated in the record management database by dividing the number of parts allotted to an urgent order (back order) by the number of parts delivered on an appointed delivery date
   As shown in Fig. 9, expected numbers 52P (the number of orders), actual numbers 52Q (the number of orders) of parts that were delivered among the number of parts included in the "data slide" response orders, and delivery ratios 52R are shown for part makers 52A.

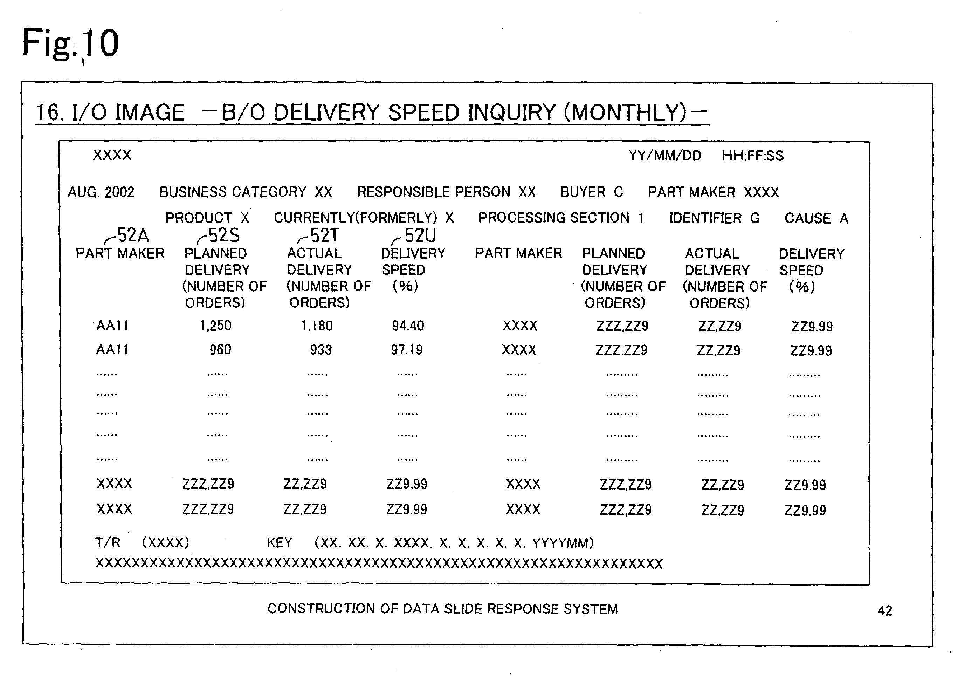

   Fig. 10 shows another example of picture of assistance in explaining record management by the back order management system (system for estimating delivery of parts back-ordered by a part maker) in the second embodiment.
   A procedure for managing a back order delivery speed in the "data slide" response system for superior part makers will be described. The back order delivery speed is a value obtained by dividing the number of parts ordered regularly in anticipation of a demand and delivered within a predetermined number of days counted from the date of order to the date of delivery, by the number of parts allotted to a back order.
(f) From the part procurement database 60 are extracted the numbers of parts delivered within a set number of days counted from the date of order to a part maker to the date of delivery, taking a lead time into consideration, and the numbers of parts allotted to urgent orders (back orders). The lead time means the number of days that elases from the date of order receipt by a part maker to the date of delivery of parts through procuring materials, machining, packing and shipping).
(g) In the record management database, delivery speeds (%), i.e. , the delivery ratios of parts ordered by urgent back orders, could be obtained also by dividing the number of types (the number of orders) of parts delivered within the set number of days, by the number of types (the number of orders) of parts allotted to back orders.

As shown in Fig. 10, delivery subjects (number of types or orders) 52S, delivery records (number of types or orders) 52T relating to orders under the "data slide" response, and delivery speeds 52U are shown for each part maker 52A.

As shown in Figs. 8 to 10, the back order hit ratio 52M, the back order delivery ratio 52R and the back order delivery speed 52U are shown in summary tables at predetermined periods, i.e., weekly, monthly and three-monthly to work out a procurement strategy.

The present invention is not limited in its application to the foregoing embodiments specifically described herein but is applicable to various back order management systems.

The number, positions, shapes and such of the components are not limited to those of the foregoing embodiments and may be any suitable numbers, positions and shapes.

### INDUSTRIAL APPLICABILITY

The present invention is used for dealing with back orders for commodities placed with product manufacturers by sales shops and such.

## Claims

1. A back order management system comprising: a host computer of a product manufacturer; and terminals of a plurality of part makers connected to the host computer by leased communication lines for information exchange;
wherein the host computer is provided with:
a stock database containing stock information about product manufacturer's stock of parts,
a back order database containing order information and back order information provided by the sales shops,
a procurement order database containing procurement order information about procurement orders placed with the part makers,
a production control database containing production schedule information and delivery date information determined by the part makers,
a procurement managing means for entering procurement order information about procurement orders placed with the part makers on the basis of the order information about orders placed by the sales shops and the stock information contained in the stock database into the procurement order database, and
a back order managing means for entering back order information into the back order database on the basis of stock information contained in the stock database, and production schedule information and delivery date information contained in the production control database into the back order database, and
each of the terminals of the plurality of part makers is provided with a received order managing means for entering the production schedule information and delivery date information created on the basis of the procurement orders placed by the product manufacturer into the production control database through the leased communication lines.

2. The back order management system according to claim 1, wherein the host computer of the product manufacturer is connected to the terminals of the plurality of part makers and terminals of the sales shops by Web lines for exchanging e-mail messages,
the procurement managing means enters the procurement order information into the procurement order database and sends e-mail messages describing the procurement order information to the part makers through the Web lines,
the received order managing means enters the production schedule information and delivery date information into the production control database and sends e-mail messages describing the production schedule information and the delivery date information to the product manufacturer through the Web lines, and
the back order managing means enters the back order information into the back order database and sends e-mail messages describing the back order information to the shops through the Web lines.

3. A back order management system comprising:
a host computer of a product manufacturer;
terminals of a plurality of sales shops connected to the host computer by leased communication lines for information exchange; and
terminals of a plurality of part makers connected to the host computer by leased communication lines for information exchange;
wherein the host computer is provided with:
a stock database containing stock information about product manufacturer's stock of parts,
a back order database containing order information and back order information provided by the sales shops and such,
a procurement order database containing procurement order information about procurement orders placed with the part makers,
a production control database containing production schedule information and delivery date information determined by the part makers,
a procurement managing means for entering the procurement order information about procurement orders placed with the part makers on the basis of the order information about orders placed by the sales shops such and the stock information contained in the stock database into the procurement order database, and
a back order managing means for entering back order information into the back order database on the basis of stock information contained in the stock database, and production schedule information and delivery date information contained in the production control database into the back order database,
each of the terminals of the plurality of sales shops is provided with an order managing means for entering order information through the leased communication line into the back order database, and
each of the terminals of the plurality of part makers is provided with a received order managing means for entering the production schedule information and delivery date information created on the basis of the procurement orders placed by the product manufacturer into the production control database through the leased communication lines.

4. The back order management system according to claim 3, wherein the host computer of the product manufacturer is connected to the terminals of the plurality of part makers and terminals of the sales shops by Web lines for exchanging e-mail messages,
the order managing means enters the order information into the back order database and sends e-mail messages describing the order information through the Web line to the product manufacturer,
the procurement managing means enters the procurement order information into the procurement order database and sends e-mail messages describing the procurement order information to the part makers through the Web lines,
the received order managing means enters the production schedule information and the delivery date information into the production control database and sends e-mail messages describing the production schedule information and the delivery date information to the product manufacturer through the Web lines, and
the back order managing means enters the back order information into the back order database and sends e-mail messages describing the back order information to the sales shops through the Web lines.

5. A back order management system for evaluating and managing delivery date from a part maker to a product manufacturer, comprising:
a host computer of the product manufacturer connected to a network;
a storage means connected to the host computer; and
a terminal of the product manufacturer connected to the host computer;
wherein the storage means is provided with a part maker database containing data on part makers, and an undelayed delivery ratio database containing undelayed delivery ratios calculated on the basis of delivery date data and a delivery record from the part makers to the product manufacturer,
the host computer makes a superior part maker database containing data on superior part makers on the basis of the part maker database and the undelayed delivery ratio database, determines superior part makers on the basis of the superior part maker database, compares the delivery date and quantity of parts delivered contained in a part procurement database relating to periodic procurement with delivery date and quantity of parts ordered in urgent back orders, makes a back order delivery date response database containing a delivery date response to be given to a customer by allotting the procurement data contained in the procurement database to the back order when the result of comparison meets a predetermined condition, allots the procurement data contained in the procurement database to the back order when the delivery date of the parts contained in the procurement database is earlier than an appointed delivery date and the quantity of the parts delivered contained in the database is greater than the quantity of parts ordered by the back order, sends the allotted procurement data as data for a response concerning delivery to the terminal and makes the terminal display the procurement data on a screen, sends the delivery date response through the network by a responding means, such as e-mail to the terminal of a customer, and
the host computer selects part makers meeting predetermined selecting conditions including an undelayed delivery ratio exceeding a predetermined threshold in a predetermined period, as superior part makers.

6. The back order management system according to claim 5 , wherein the storage means is provided with a part procurement database containing part procurement date on parts procured from all part makers, and
the host computer makes a delivery ratio database by calculating a delivery ratio represented by the ratio of quantity of parts delivered to quantity of parts ordered, on the basis of the part procurement data contained in the part procurement database, makes an abnormal delivery ratio database containing abnormal delivery ratios each calculated by dividing the difference between the quantity of parts ordered and the quantity of parts delivered by the quantity of parts ordered for each part maker, sends the details of an appointed delivery date appointed for each order number of an order placed with each part maker, and an actual delivery date, and the abnormal delivery ratio with each part maker to the terminal, and makes the terminal display the details on a screen.

7. The back order management system according to claim 5, wherein the storage means is provided with a part procurement database containing data on parts procured from all part makers, and
the host computer extracts the number of types of parts ordered by urgent back orders from the part procurement database, extracts the number of parts ordered in the response concerning delivery, allotted to back orders, makes a back order hit ratio database containing back order hit ratios each corresponding to the ratio of the number of data in the response concerning delivery to the number of order data in the part maker, sends the back order hit ratios to the terminal, and makes the terminal display the back order hit ratios on a screen.

8. The back order management system according to claim 5 , wherein the storage means is provided with a part procurement database containing part procurement records relating to all part makers, and
the host computer extracts the number of types of parts delivered on appointed delivery dates and the number of types of parts represented by procurement data from the part procurement database, makes a back order delivery ratio database containing back order delivery ratios each representing the ratio of the number of types of parts delivered on an appointed delivery date to the number of parts ordered by a back order, sends the back order delivery ratios to the terminal, and makes the terminal to display the back order delivery ratios on a screen.

9. The back order management system according to claim 5 , wherein the storage means is provided with a part procurement database containing part procurement records relating to all part makers, and
the host computer extracts the number of types of parts delivered within a set number of days counted from the date of order to a part maker to the date of delivery, and the number of back-ordered types of parts from the part procurement database, calculates back order delivery speeds each corresponding to the ratio of the number of types of parts delivered within a set number of days to the number of back-ordered types of parts in the part maker, makes a back order delivery speed database containing the back order delivery speeds, sends the back order delivery speeds to the terminal, and makes the terminal display the back order delivery speeds on a screen.

10. The back order management system according to claim 5, wherein the host computer sends the contents of data on delivered parts and abnormal delivery ratios not smaller than or exceeding a predetermined set value to the terminals of the relevant part makers, and makes the terminals of the relevant part makers display the contents of data on a screen.
